# EUROPEAN PATENT SPECIFICATION

(11) **EP 3 642 097 B1**
(45) Date of publication and mention of the grant of the patent: **29.06.2022**
(21) Application number: 17732140.3
(22) Date of filing: 23.06.2017
(51) Int. Cl.: B62D 15/02, B62D 5/00

(54) **STEER-BY-WIRE STEERING SYSTEM WITH MULTI-TURN STEERING WHEEL ANGLE DETERMINATION**
STEER-BY-WIRE-LENKSYSTEM MIT MEHRFACHDREHUNGSLENKRADWINKELBESTIMMUNG
SYSTÈME DE DIRECTION À DIRECTION À COMMANDE ÉLECTRIQUE AVEC DÉTERMINATION D'ANGLE DE VOLANT DE DIRECTION À PLUSIEURS TOURS

(43) Date of publication of application: 29.04.2020
(73) Proprietor: thyssenkrupp Presta AG, 9492 Eschen (LI); thyssenkrupp AG, 45143 Essen (DE)
(72) Inventor: DZSUDZSÁK, Gergely, 8945 Bak (HU); RÁCZ, Gergely, 1115 Budapest (HU); SZEPESSY, Imre, 9493 Mauren (LI)
(74) Representative: thyssenkrupp Intellectual Property GmbH
(86) International application number: PCT/EP2017/065559
(87) International publication number: WO 2018/233846

(56) References cited:
- JP-A- 2007 245 819
- US-A1- 2009 024 279
- US-B1- 6 354 396

## Description

The present invention relates to a steer-by-wire steering system of a motor vehicle according to the preamble of claim 1 and a method for determination of an multi-turn steering wheel angle in a steer-by-wire steering system of a motor vehicle according to the preamble of claim 6.

In an electromechanical power steering mechanism a steering shaft is connected to a steering wheel for operation by the driver. The steering shaft is coupled to a steering rack via a gear pinion. Steering rack rods are connected to the steering rack and to steered wheels of the motor vehicle. A rotation of the steering shaft causes an axial displacement of the steering rack by means of the gear pinion which is connected to the steering shaft in a torque-proof manner. Assist force is applied to a steering mechanism by driving an electric motor. In electromechanical power steering mechanism the multi-turn steering wheel angle can be measured via multiple sensors with gears or with a single turn sensor with sleep-mode functionality. The sleep-mode functionality turns on the sensor periodically to detect and count the rotation of the steering wheel. With this functionality the system can provide absolute (>360°) steering wheel angle information. This information is lost when the power supply is disconnected. But it is possible to recover the position information from other vehicle signals such as the individual rotation speed of the road wheels.

In steer-by-wire systems there is no mechanical connection between the steering wheel and the steering rack and the steerable wheels and steering movement is achieved by an electrically controlled motor. It is therefore not possible to recover the multi-turn steering wheel angle by observing physical values measured by the motor vehicle. It is known to add single turn or multi turn angle sensors to recover the absolute steering wheel angle information.

JP 2007 245 819 A, on which the preamble of claim 1 is based, describes an input device of a steer-by-wire system capable of restraining noise and torque fluctuation, wherein a reaction force motor connected to the input shaft of a speed reducer gives a reaction force in correspondence with an operation force of a handle to the operation input shaft and an angle sensor detects an axial angle of the output shaft of the speed reducer.

US 6 354 396 B1 relates to an electric power assisted steering system which comprises a steering shaft connected at one end to the handwheel and at its other end to at least one roadwheel, while an electric motor is connected to the steering shaft via a gearbox having a non-integer reduction gear ratio. Two sensors are also provided with one sensing the angular position of the motor rotor and the other sensing the angular position of the steering shaft. The presence of the non-integer gear ratio produces a beat frequency between the output of the two sensors from which an unambiguous measurement of the angular position of the steering shaft over a range of greater than one complete revolution can be made.

It is an object of the present invention to provide a steer-by-wire steering system of a motor vehicle with a cost-effective and easy multi-turn steering wheel angle determination with a higher resolution.

This object is achieved by a steer-by-wire steering system of a motor vehicle having the features of claim 1 and a method having the features of claim 6. Accordingly, a steer-by-wire steering system of a motor vehicle is provided comprising a steering wheel, which is mounted non-rotatably to a steering shaft, a feedback actuator for providing road feedback to a driver, wherein the feedback actuator has an electric motor with a rotor shaft and wherein the rotor shaft is connected to the steering shaft via a transmission, an index sensor arranged on the steering shaft and a rotor angle sensor, wherein the ratio of the transmission is a non-integer value. This transmission ratio creates a phase shift between the signals of the two sensors, which allows absolute angle signal recovery with rotation of the steering wheel by less than 360°. With an integer valued transmission ratio the rotor angle signal and the index sensor signal would have no phase shift over multiple steering wheel rotations, which would prevent recovering the absolute steering wheel angle over a small movement of the steering wheel.

The index sensor is a single turn sensor, which provides signal pulses, if the steering wheel angle is within pre-defined ranges. These pre-defined ranges are spaced in a pseudorandom encoding circumferentially around the steering shaft. It is advantageous, if the pseudorandom encoding consists of bits. Preferably, the rotor angle sensor is a single turn sensor.

The transmission can be any kind of transmission as long as it has appropriate mechanical accuracy. It is preferred that the transmission is a belt drive.

Further a method for determination of an multi-turn steering wheel angle in steer-by-wire steering system of a motor vehicle is provided, the steer-by-wire steering system comprising a steering wheel, which is mounted non-rotatably to a steering shaft, a feedback actuator for providing road feedback to a driver, wherein the feedback actuator has an electric motor with a rotor shaft and wherein the rotor shaft is connected to the steering shaft via a transmission, an index sensor arranged on the steering shaft and a rotor angle sensor, wherein said method comprises the following steps:
- Providing signal pulses by the index sensor, if the steering wheel angle is within pre-defined ranges over a single turn;
- Providing a single turn rotor angle signal by the rotor angle sensor, wherein the two signals have a phase shift as a result of a non-integer transmission ratio;
- Determination of an multi-turn steering wheel angle using the two signals.

This method presents an easy way to determine the multi-turn steering wheel angle without the need for sensors with sleep-mode functionality and multi-turn sensors.

The pre-defined ranges are spaced in a pseudorandom encoding circumferentially around the steering shaft. It is advantageous, if the pseudorandom encoding consists of bits.

A preferred embodiment of the present invention will be described with reference to the drawings.
- Figure 1:: is a schematic illustration of a steer-by-wire steering system of a motor vehicle with an multi-turn steering wheel angle sensor according to the present invention; and
- Figure 2:: is a graph of the signals measured by the sensors.

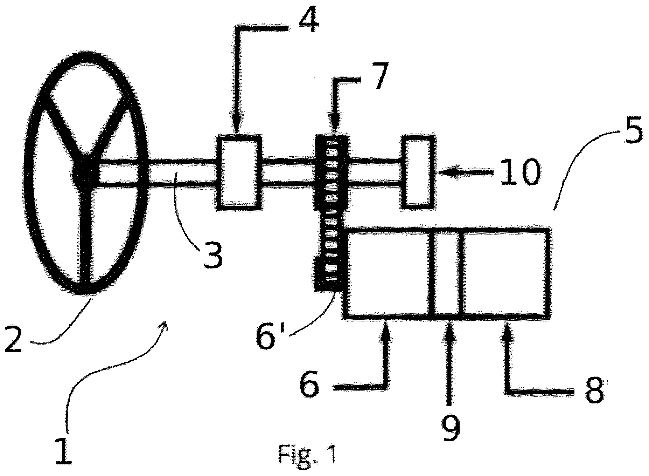

Figure 1 shows a simplified overview of a steer-by-wire steering system 1 of a motor vehicle. A steering wheel 2 is connected to a steering shaft 3 on which an index sensor 4 is arranged. A feedback actuator 5 acts on the shaft 3 to generate a steering feel.The feedback actuator 5 has an electric motor 6 connected to a transmission 7 via a motor shaft 6' in form of a belt drive. An electronic control unit (ECU) 8 controls the electric motor 6 based on the rotor angle, the steering wheel angle and other signals not shown in this figure. The rotor angle is measured by a rotor angle sensor 9 arranged between the electric motor 6 and the ECU 8. At the end of the steering shaft 3 an optional steering wheel lock 10 is arranged. The optional steering wheel lock 10 is used to limit the movement of the steering wheel 2, allowing to mechanically lock the steering system 1. The transmission ratio between the motor shaft 6' and the steering shaft 3 is a non-integer value. This means that the transmission ratio is not an integer ratio (1:N, where N is not an integer).

The index sensor 4 provides signal pulses, when the steering wheel angle is within pre-defined ranges, which are determined during design and are placed in a pseudorandom fashion over a single turn (single turn sensor). The resulting signal periodicity of the index sensor 4 is therefore not larger than 360° on the steering wheel. The rotor angle sensor is a single turn sensor, as well.

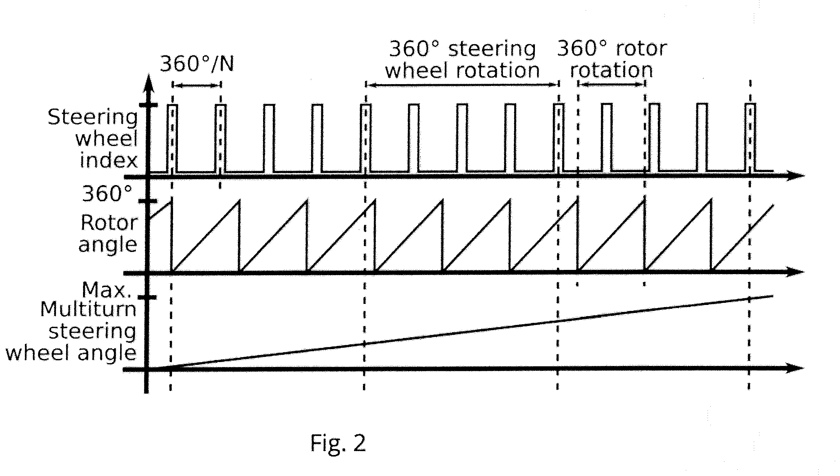

Figure 2 shows the sensors' signals and the resulting multi-turn steering wheel angle. At the top the signal output of the index sensor 4 is shown. This signal is periodic over 360° of steering wheel rotation and in this example it consists of four pulses per steering wheel rotation. Below the signal output of the rotor angle sensor is shown. This signal is also periodic over 360° of rotor rotation. Because the transmission between the steering wheel and the rotor has a transmission ration, which is a non-integer value, the periodicity of the rotor rotation is not equivalent to the periodicity of steering wheel rotation. The signal output of the index sensor shifts in phase compared to the rotor angle signal output. This phase shift allows to recover the multi-turn (absolute) steering wheel angle without rotating the steering wheel from lock to lock when the steering wheel is at an angle, where the index signal output is high. To recover the steering wheel angle, the steering wheel has to be rotated to the next index pulse location.

In the shown example the transmission ratio from the electric motor to the steering wheel is 97:277 (1:2.85567), so one steering wheel rotation equals 2.85567 rotations of the electric motor.

The periodicity of the index signal carries a pseudorandom encoding. As an example a 7 bit pseudorandom generator can create 128 bits of which can be placed on the circumference of the sensor plate of the index sensor. After reading 7 bits from the sensor plate the absolute position of the steering wheel can be determined with a resolution of 2.8°. To get the single turn steering wheel angle value the steering wheel has to be moved by ~20°. With 5 bits of resolution, 32 bits can be placed on the circumference of the sensor plate. One bit equals 11.25°, so the steering wheel has to be moved by ~57° to read the necessary 5 bits to recover the single turn steering wheel angle value. Even though the resolution is relatively low, it is significantly higher than the resolution of a simple index sensor, and the locations of the edges of the signal can have much higher precision, than the bit width of the encoding.

The present invention provides an absolute angle sensor with an index sensor having a signal with a periodicity less than or equal to 360° with a pseudorandom encoding and a transmission which creates a phase shift between the signal of the index sensor and the rotor angle sensor allowing absolute steering wheel angle recovery without full lock-to-lock rotation of the steering wheel.

## Claims

1. A steer-by-wire steering system (1) of a motor vehicle comprising:
- a steering wheel (2), which is mounted non-rotatable to a steering shaft (3),
- a feedback actuator (5) for providing road feedback to a driver, wherein the feedback actuator (5) has an electric motor (6) with a rotor shaft (6') and wherein the rotor shaft (6') is connected to the steering shaft (3) via a transmission (7), and
- a rotor angle sensor (9), wherein the ratio of the transmission (7) is a non-integer value;
**characterized in that** an index sensor (4) is arranged on the steering shaft (3), wherein the index sensor (4) is a single turn sensor, which provides signal pulses, if the steering wheel angle is within predefined ranges and the predefined ranges are spaced in a pseudorandom encoding circumferentially around the steering shaft.

2. Steer-by-wire steering system (1) according to claim 1, **characterized in that** the pseudorandom encoding consists of bits.

3. Steer-by-wire steering system (1) according to one of the preceding claims, **characterized in that** the rotor angle sensor (9) is a single turn sensor.

4. Steer-by-wire steering system (1) according to one of the preceding claims, **characterized in that** the transmission (7) is a belt drive.

5. Steer-by-wire steering system (1) according to one of the preceding claims, **characterized in that** the transmission (7) is a worm drive.

6. A method for determination of an multi-turn steering wheel angle in steer-by-wire steering system (1) of a motor vehicle comprising:
- a steering wheel (2), which is mounted non-rotatable to a steering shaft (3),
- a feedback actuator (5) for providing road feedback to a driver, wherein the feedback actuator (5) has an electric motor (6) with a rotor shaft (6') and wherein the rotor shaft (6') is connected to the steering shaft (3) via a transmission (7), wherein the ratio of the transmission (7) is a non-integer value,
- an index sensor (4) arranged on the steering shaft (3) and
- a rotor angle sensor (9), wherein said method comprises the following steps:
- Providing signal pulses by the index sensor (4), if the steering wheel angle is within pre-defined ranges over a single turn, wherein the periodicity of the index signal carries a pseudorandom encoding;
- Providing a single turn rotor angle signal by the rotor angle sensor (9), wherein the two signals have a phase shift as a result of a non-integer transmission ratio;
- Determination of a multi-turn steering wheel angle using the two signals.

7. Method according to claim 6, **characterized in that** the pseudorandom encoding consists of bits.

## Patentansprüche

1. Steer-by-Wire-Lenksystem (1) eines Kraftfahrzeugs, umfassend:
- ein Lenkrad (2), das drehfest an einer Lenkwelle (3) montiert ist,
- einen Feedback-Aktuator (5) zum Bereitstellen einer Straßenrückmeldung an einen Fahrer, wobei der Feedback-Aktuator (5) einen Elektromotor (6) mit einer Rotorwelle (6') aufweist und wobei die Rotorwelle (6') mit der Lenkwelle (3) über ein Getriebe (7) verbunden ist, und
- einen Rotorwinkelsensor (9), wobei das Übersetzungsverhältnis des Getriebes (7) ein nicht ganzzahliger Wert ist;
**dadurch gekennzeichnet, dass** ein Indexsensor (4) an der Lenkwelle (3) angeordnet ist, wobei der Indexsensor (4) ein Singleturn-Sensor ist, der Signalimpulse bereitstellt, wenn der Lenkradwinkel in vordefinierten Bereichen liegt, und die vordefinierten Bereiche in einer pseudozufälligen Codierung umlaufend um die Lenkwelle beabstandet sind.

2. Steer-by-Wire-Lenksystem (1) nach Anspruch 1, **dadurch gekennzeichnet, dass** die pseudozufällige Codierung aus Bits besteht.

3. Steer-by-Wire-Lenksystem (1) nach einem der vorhergehenden Ansprüche, **dadurch gekennzeichnet, dass** der Rotorwinkelsensor (9) ein Singleturn-Sensor ist.

4. Steer-by-Wire-Lenksystem (1) nach einem der vorhergehenden Ansprüche, **dadurch gekennzeichnet, dass** das Getriebe (7) ein Riementrieb ist.

5. Steer-by-Wire-Lenksystem (1) nach einem der vorhergehenden Ansprüche, **dadurch gekennzeichnet, dass** das Getriebe (7) ein Schneckentrieb ist.

6. Verfahren zum Bestimmen eines Multiturn-Lenkradwinkels in einem Steer-by-Wire-Lenksystem (1) eines Kraftfahrzeugs, umfassend:
- ein Lenkrad (2), das drehfest an einer Lenkwelle (3) montiert ist,
- einen Feedback-Aktuator (5) zum Bereitstellen einer Straßenrückmeldung an einen Fahrer, wobei der Feedback-Aktuator (5) einen Elektromotor (6) mit einer Rotorwelle (6') aufweist und wobei die Rotorwelle (6') mit der Lenkwelle (3) über ein Getriebe (7) verbunden ist, wobei das Übersetzungsverhältnis des Getriebes (7) ein nicht ganzzahliger Wert ist,
- einen Indexsensor (4), der an der Lenkwelle (3) angeordnet ist, und
- einen Rotorwinkelsensor (9), wobei das Verfahren die folgenden Schritte umfasst:
- Bereitstellen von Signalimpulsen durch den Indexsensor (4), wenn der Lenkradwinkel über eine einzelne Umdrehung in vordefinierten Bereichen liegt, wobei die Periodizität des Indexsignals eine pseudozufällige Codierung trägt;
- Bereitstellen eines Singleturn-Rotorwinkelsignals durch den Rotorwinkelsensor (9), wobei die zwei Signale eine Phasenverschiebung infolge eines nicht ganzzahligen Getriebeübersetzungsverhältnisses aufweisen;
- Bestimmung eines Multiturn-Lenkradwinkels unter Verwendung der zwei Signale.

7. Verfahren nach Anspruch 6, **dadurch gekennzeichnet, dass** die pseudozufällige Codierung aus Bits besteht.

## Revendications

1. Système de direction à commande par câble électrique (1) d'un véhicule à moteur, comprenant :
- un volant de direction (2), qui est monté de façon non rotative sur un arbre de direction (3),
- un actionneur de rétroaction (5) pour fournir une rétroaction de route à un conducteur, dans lequel l'actionneur de rétroaction (5) a un moteur électrique (6) avec un arbre de rotor (6') et dans lequel l'arbre de rotor (6') est relié à l'arbre de direction (3) par l'intermédiaire d'une transmission (7), et
- un capteur d'angle de rotor (9), dans lequel le rapport de la transmission (7) est une valeur non entière ;
**caractérisé en ce qu'**un capteur d'indice (4) est agencé sur l'arbre de direction (3), dans lequel le capteur d'indice (4) est un capteur mono-tour, qui fournit des impulsions de signal, si l'angle de volant de direction est au sein de plages prédéfinies et les plages prédéfinies sont espacées dans un encodage pseudo-aléatoire circonférentiellement autour de l'arbre de direction.

2. Système de direction à commande par câble électrique (1) selon la revendication 1, **caractérisé en ce que** l'encodage pseudo-aléatoire est constitué de bits.

3. Système de direction à commande par câble électrique (1) selon un des revendications précédentes, **caractérisé en ce que** le capteur d'angle de rotor (9) est un capteur mono-tour.

4. Système de direction à commande par câble électrique (1) selon un des revendications précédentes, **caractérisé en ce que** la transmission (7) est un entraînement à courroie.

5. Système de direction à commande par câble électrique (1) selon un des revendications précédentes, **caractérisé en ce que** la transmission (7) est un entraînement à vis sans fin.

6. Procédé pour détermination d'un angle de volant de direction multi-tour dans un système de direction à commande par câble électrique (1) d'un véhicule à moteur comprenant :
- un volant de direction (2), qui est monté de façon non rotative sur un arbre de direction (3),
- un actionneur de rétroaction (5) pour fournir une rétroaction de route à un conducteur, dans lequel l'actionneur de rétroaction (5) a un moteur électrique (6) avec un arbre de rotor (6') et dans lequel l'arbre de rotor (6') est relié à l'arbre de direction (3) par l'intermédiaire d'une transmission (7), dans lequel le rapport de la transmission (7) est une valeur non entière,
- un capteur d'indice (4) agencé sur l'arbre de direction (3), et
- un capteur d'angle de rotor (9), dans lequel ledit procédé comprend les étapes suivantes :
- la fourniture d'impulsions de signal par le capteur d'indice (4), si l'angle de volant de direction est au sein de plages prédéfinies durant un mono-tour, dans lequel la périodicité du signal d'indice porte un encodage pseudo-aléatoire ;
- la fourniture d'un signal d'angle de rotor mono-tour par le capteur d'angle de rotor (9), dans lequel les deux signaux ont un déphasage en conséquence d'un rapport de transmission non entier ;
- la détermination d'un angle de volant de direction multi-tour en utilisant les deux signaux.

7. Procédé selon la revendication 6, **caractérisé en ce que** l'encodage pseudo-aléatoire est constitué de bits.
